# EUROPÄISCHE PATENTSCHRIFT

(11) **EP 1 537 170 B1**
(45) Veröffentlichungstag und Bekanntmachung des Hinweises auf die Patenterteilung: **13.02.2008**
(21) Anmeldenummer: 03769351.2
(22) Anmeldetag: 06.10.2003
(51) Int. Cl.: C08J 3/12

(54) **VERRUNDETES KUNSTSTOFFPULVER, INSBESONDERE ZUR VERWENDUNG BEIM LASERSINTERN, VERFAHREN ZUR HERSTELLUNG EINES SOLCHEN PULVERS UND LASERSINTERVERFAHREN, DAS EIN SOLCHES PULVER VERWENDET**
ROUNDED-PARTICLE PLASTIC POWDER IN PARTICULAR FOR APPLICATION IN LASER SINTERING, METHOD FOR PRODUCTION OF SUCH A POWDER AND LASER SINTERING PROCESS USING SUCH A POWDER
MATIERE PLASTIQUE PULVERULENTE A PARTICULES ARRONDIES, S'UTILISANT NOTAMMENT DANS LE FRITTAGE LASER, PROCEDE DE PRODUCTION D'UNE TELLE POUDRE ET PROCEDE DE FRITTAGE LASER FAISANT APPEL A UNE TELLE POUDRE

(30) Priorität: 02.12.2002 DE 10256097
(43) Veröffentlichungstag der Anmeldung: 08.06.2005
(73) Patentinhaber: EOS GmbH Electro Optical Systems, 82152 Krailling (DE)
(72) Erfinder: GERSCH, Mandy, 89073 Ulm (DE); MÜLLER, Frank, 82256 Fürstenfeldbruck (DE); MATTES, Thomas, 82110 Germering (DE); KELLER, Peter, 82152 Krailling (DE)
(74) Vertreter: Hofer, Dorothea
(86) Internationale Anmeldenummer: PCT/EP2003/011032
(87) Internationale Veröffentlichungsnummer: WO 2004/050746

(56) Entgegenhaltungen:
- EP-A- 0 555 947
- EP-A- 0 863 174
- DE-A- 4 301 543

## Beschreibung

Die vorliegende Erfindung betrifft ein verrundetes Kunststoffpulver, insbesondere zur Verwendung beim Lasersintern, ein Verfahren zur Herstellung eines solchen Pulvers sowie ein Lasersinterverfahren für die Herstellung eines dreidimensionalen Objektes, das dieses Pulver verwendet

EP 0 863 174 A1 beschreibt ein Verfahren zur Herstellung von Polyamid-Fällpulvern mit enger Korngrößenverteilung und niedriger Porosität. Die Pulver mit den gewünschten Eigenschaften werden dabei durch ein Fällverfahren mit vorangehender Keimbildungsphase erhalten.

DE 43 01 543 A1 beschreibt Mikropulver mit sphärischen Teilchen mit einer im wesentlichen glatten Oberflächenstruktur, die als wesentliche Komponente Polyarylenethersulfone oder -ketone enthalten. Diese Pulver werden durch Prillen von deren Schmelzen oder durch Sprühtrocknung von deren Lösungen erhalten.

EP 0 555 947 A1 beschreibt ein Verfahren für die Oberflächenbehandlung von Teilchen sowie eine dazugehörige Vorrichtung. Dabei werden Teilchen einer Substanz auf der Oberfläche von Pulverteilchen einer anderen Substanz eingebettet. Hierzu werden die Partikel einer von mehreren, untereinander verbundenen Aufschlagkammern zugeführt, die mit einer Drehscheibe mit Aufschlagstiften versehen sind, sowie mit einem Aufprallring, so daß das Gemisch einem Schlagprallvorgang ausgesetzt wird, wodurch ein durch diesen Vorgang erzeugter Luftstrom von dem Pulvergemisch getrennt und kontinuierlich aus der Aufschlagkammer freigegeben wird, wobei der Aufschlagvorgang wiederholt wird und das Pulvergemisch vorübergehend in der Aufschlagkammer ruhen kann, bevor es in die darauffolgende Kammer weitergeleitet wird.

Kunststoffpulver entstehen
- direkt während der Polymerisation der entsprechenden Monomoren (beispielsweise bei der Suspensionspolymerisation)
- durch mechanische Zerkleinerung in einer für den jeweiligen Kunststoff und für den geforderten Zerkleinerungsgrad geeigneten Mühle
- durch Versprühen einer Lösung oder Schmelze des Kunststoffs mittels einer geeigneten Düse, durch die die Lösung/Schmelze mit hohem Druck hindurchgepreßt wird
- durch Auflösung des Kunststoffes in einem geeigneten Lösungsmittel und Ausfällen durch Reduzierung der Temperatur und/oder Erhöhung der Polymerkonzentration in der Lösung.

Als Anwendungen für solche Fällpulver aus Polyamid 11 und Polyamid 12 sind in der Literatur (Kunststoffhandbuch "Polyamide", Carl Hanser Verlag, München Wien, 1998, Kap. 4.14 (Seite 746 - 756) genannt:
- Die Beschichtung von Metallen nach dem Wirbelsinterverfahren;
- die Elektrostatische Pulverbeschichtung;
- die Zugabe zu Coil-Coating-Lacken.

Weiterhin ist bekannt die Verwendung von Polyamidpulvern in Kosmetika (beschrieben in der Firmenbroschüre über Orgasol der Firma Atofina, nachzulesen im Internet unter www.atofina.com unter dem Stichwort Orgasol Cosmetics).

Dem Fachmann ist einleuchtend, daß für die genannten Anwendungen dieser Pulver eine hohe Schüttdichte und gute Rieselfähigkeit wichtig ist. Zudem sollen sie eine niedrige BET - Oberfläche gemessen nach DIN ISO 9277 aufweisen. Diese Eigenschaften sind abhängig von der Kornform. Deshalb werden Kornformen bevorzugt, die frei von scharfen Kanten (sphärisch) und nicht porös sind. Diese Forderung gilt auch und besonders für das Lasersintern, bei dem die Vorteile des Pulvers gemäß der Erfindung ausführlich beschrieben werden.

Die Forderung wird nur von solchen Kunststofffpulvern erfüllt, die direkt bei der Polymerisation entstehen. Pulver, die nach dem Stand der Technik durch Mahlen oder Fällung entstehen, erfüllen die Forderung nicht.

Mahlpulver haben zudem den Nachteil einer breiten Kornverteilung. Das bedeutet, daß sie, weil die Anwendungen limitierte Kornbänder voraussetzen, einen nachgeschalteten Klassiervorgang, bei dem ein Teil des Pulvers als wertlose Nebenausbeute ausgeschleust wird, aufweisen müssen.

Fällungs-, Sprüh- oder aus der Schmelzdispergierung gewonnene Pulver weisen häufig die für die vorgesehene Anwendung notwendigen Korngrößenverteilungen auf. So offenbart beispielsweise die EP 863 174 ein Verfahren zur Herstellung von Polyamid-Pulvern für Beschichtungen, bei dem ein Homopolyamid oder ein Copolyamid aus alkoholischer Lösung umgefällt werden. Ein mit diesem Verfahren hergestelltes Polyamidpulver besitzt eine Kornobergrenze von 100µm, einen D_{0.9}-Wert unter 90µm, einen D_{0.1}-Wert unter 32µm und eine BET-Oberfläche von unter 10. Allerdings ist die Porosität, ausgedrückt als BET-Oberfläche, weiterhin hoch. Der Fällungsprozeß stößt dabei an seine Grenzen, da bei ihm nur ein bestimmter Spielraum zur Einstellung der BET bei gleichbleibendem bzw. sinkendem Mittelkorn vorhanden ist.

Beim Lasersintern von Kunststoffpulver, wie es beispielsweise aus der DE 44 10 046 bekannt ist, werden dreidimensionale Objekte schichtweise hergestellt, indem Schichten eines Pulvers aufgetragen und durch selektives Verfestigen an den dem Querschnitt der Objekte entsprechenden Stellen miteinander verbunden werden. An das Pulver werden entsprechend der Verfahrenscharakteristik spezielle Anforderungen gestellt.

Zur Gewährleistung einer hohen Detailgenauigkeit und Oberflächengüte der herzustellenden Objekte sind Kunststoffpulver notwendig, die eine Kornobergrenze von 100µm und einen 90%-Anteil unter 90µm (D_{0.9}-Wert) besitzen. Desweiteren müssen die Pulver zur Sicherstellung eines stabilen Schichtauftrages über einen 10%-Anteil kleiner 32µm (D_{0.1}-Wert) verfügen. Weiterhin sollten die Partikel eine sphärische Kornform besitzen. Diese Kornform ist auch zur Gewährleistung einer gleichmäßigen und glatten Oberfläche notwendig.

Bei Verwendung von Kunststoffpulvern zum Lasersintern ist eine geringe Porösität der Partikel, ausgedrückt als BET-Oberfläche, notwendig, da sich dadurch die Pulverbettdichte erhöhen läßt und die Reaktionsneigung und Alterung des Pulvers stark herabgesetzt werden. Die letztgenannten Eigenschaften sind beim Lasersintern von großer Bedeutung, da beim Prozeß hohe Temperaturen auftreten und die Prozeßdauern sehr lang sein können, was in Abhängigkeit vom Kunststofftyp zu Auf- und Abbauvorgängen an dem Pulver führen und so eine Wiederverwendbarkeit des Pulvers erschweren kann. Letzteres zeigt sich in einem hohen Auffrischfaktor, welcher als der Prozentsatz an Neupulver bezeichnet wird, der bei Wiederverwendung von Pulver, zur Vermeidung einer Veränderung der Lasersinter- und Objekteigenschaften gegenüber einem Lasersintervorgang unter Verwendung ausschließlich neuen Pulvers, dem wiederverwendeten Pulver hinzugefügt werden muß.

Durch die große BET-Oberfläche wird die während des Sinterprozesses stattfindende Alterung des unbelichteten Pulvers begünstigt, wodurch ein hoher Auffrischfaktor nötig ist, um keine Abstriche bei der Oberflächengüte und Mechanik der gesinterten Objekte in Kauf nehmen zu müssen.

Die Aufgabe der Erfindung ist es daher, ein hinsichtlich Rieselfähigkeit und Porosität optimiertes Pulver bereitzustellen, das insbesondere für das Lasersintern geeignet ist, sowie ein Lasersinterverfahren, das dieses Pulver als Baumaterial verwendet.

Die Aufgabe wird gelöst durch ein Pulver nach Anspruch 1 ein Verfahren zur Herstellung eines Pulvers nach Anspruch 8 und ein Verfahren zum Herstellen eines dreidimensionalen Objektes nach Anspruch 11.

Weiterbildungen der Erfindung sind in den Unteransprüchen beschrieben.

Weitere Merkmale und Zweckmäßigkeiten der Erfindung ergeben sich aus der Beschreibung von Ausführungsbeispielen anhand der Figuren. Von den Figuren zeigen:
- Fig. 1: eine schematische Ansicht des Aufbaus einer Vorrichtung zum Herstellen eines dreidimensionalen Objekts mittels des Lasersinterverfahrens,
- Fig. 2a und 2b: REM-Aufnahmen 10000x eines PA12-Fällpulvers (a) vor der Behandlung und (b) nach der Behandlung und
- Fig. 3: das Integral über die Kornverteilung für die gemäß den Beispielen 1 bis 4 behandelten Pulver in Abhängigkeit von der Partikelgröße.

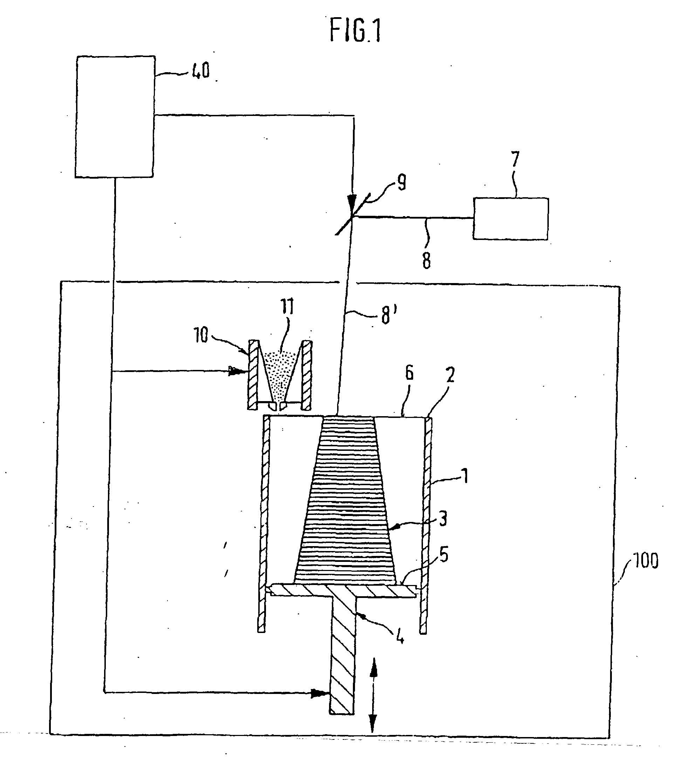

Wie aus Fig. 1 ersichtlich ist, weist eine Vorrichtung zur Durchführung eines Lasersinterverfahrens einen Behälter 1 auf, der nur durch eine in Umfangsrichtung geschlossene Seitenwand gebildet wird. Durch den oberen Rand 2 der Seitenwand bzw. des Behälters 1 ist eine Arbeitsebene 6 definiert. In dem Behälter 1 ist ein Träger 4 zum Tragen eines zu bildenden Objekts 3 angeordnet. Das Objekt befindet sich auf der Oberseite des Trägers 4 und ist aus einer Mehrzahl sich parallel zu der Oberseite des Trägers 4 erstreckender Schichten aus einem mittels elektromagnetischer Strahlung verfestigbaren, pulverförmigen Aufbaumaterial gebildet. Der Träger 4 ist über eine Höheneinstellvorrichtung in vertikaler Richtung, d.h. parallel zu der Seitenwand des Behälters 1 verschiebbar. Damit kann die Position des Trägers 4 relativ zur Arbeitsebene 6 eingestellt werden.

Oberhalb des Behälters 1 bzw. der Arbeitsebene 6 ist eine Aufbringvorrichtung 10 zum Aufbringen eines zu verfestigenden Pulvermaterials 11 auf die Trägeroberfläche 5 oder eine zuletzt verfestigte Schicht vorgesehen. Weiterhin ist oberhalb der Arbeitsebene 6 eine Bestrahlungseinrichung in Form eines Lasers 7 angeordnet, die einen gerichteten Lichtstrahl 8 abgibt. Dieser wird über eine Ablenkeinrichtung 9, beispielsweise einen Drehspiegel, als abgelenkter Strahl 8' in Richtung der Arbeitsebene 6 abgelenkt.

Bei der Herstellung des dreidimensionalen Objektes 3 wird das Pulvermaterial 11 schichtweise auf den Träger 4 bzw. eine zuvor verfestigte Schicht aufgetragen und mit dem Laserstrahl 8' an den dem Objekt entsprechenden Stellen einer jeden Pulverschicht verfestigt. Der Träger 4 wird dabei schichtweise abgesenkt.

Es wurden unterschiedliche Verfahren zur Nachbehandlung von Kunststoffpulvern untersucht, um deren Eigenschaften im Hinblick auf das Lasersintern zu verbessern. Ziel war es dabei, durch Einbringen von mechanischer oder mechanisch-thermischer Energie eine Oberflächenglättung, gekennzeichnet durch eine niedrigere BET-Oberfläche, zu erreichen.

Als Ausgangsmaterial wird ein nach dem Stand der Technik der EP 863 174 hergestelltes PA12-Fällpulver verwendet, welches einen 10%-Anteil kleiner 38 µm (D_{0,1} < 38µm), einen 50%-Anteil kleiner 57µm (D_{0,5} < 57µm) und einen 90%-Anteil kleiner 77µm (D_{0,9} < 77µm) sowie eine BET-Oberfläche von 6 m²/g aufweist.

Die nachfolgenden Beispiele für eine Pulverbehandlung liefern alle ein erfindungsgemäßes Polymerpulver zur Herstellung eines dreidimensionalen Objektes.

### Beispiel 1:

Das Ausgangspulver wurde in einer handelsüblichen Pulverbehandlungsmaschine NHS-1 der Firma Nara in Anlehnung an ein im Patent EP 555 947 beschriebenes Verfahren nachbehandelt. Die Behandlung dauerte eine Minute, die Umdrehungszahl betrug 8000 U/min.

### Beispiel 2:

Das Ausgangspulver wurde wie in Beispiel 1 behandelt, jedoch dauerte die Behandlung statt einer Minute drei Minuten.

### Beipiel 3:

Das Ausgangspulver wurde in einem handelsüblichen Mischer durch scherendes Mischen nachbehandelt. Dabei wurde die Rührerdrehzahl so eingestellt, daß sich das Pulver innerhalb von zehn Minuten auf 140 °C erhitzte. Dann wurde die Drehzahl soweit gesenkt, daß die Temperartur über einen weiteren Zeitraum von fünf Minuten konstant bei 140°C gehalten wurde.

### Beispiel 4:

Das Ausgangspulver wurde wie in Beispiel 3 behandelt, jedoch dauerte die Haltephase zehn Minuten.

Die in den Beispielen 1 bis 4 verwendeten Drehzahlen, Behandlungsdauern und Temperaturen sind in Tabelle I zusammengestellt.

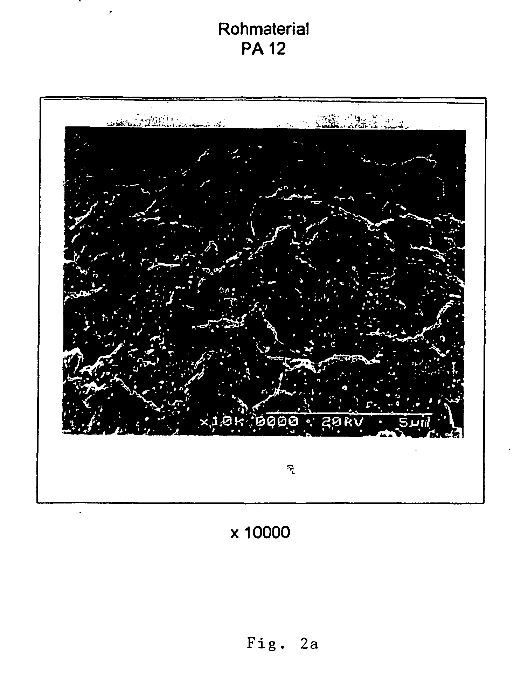

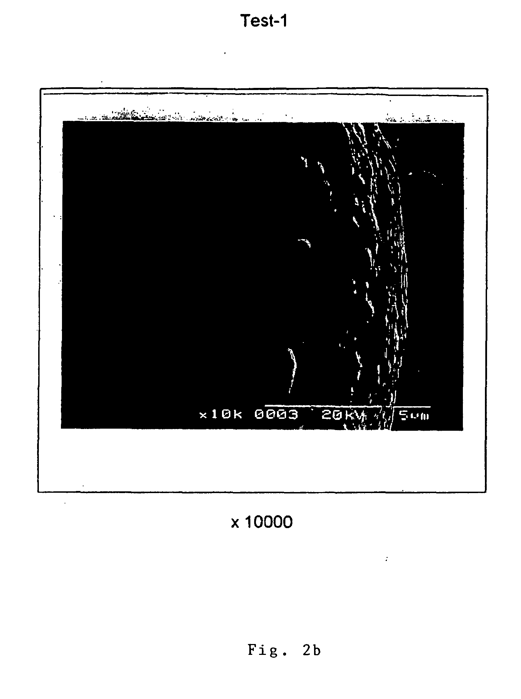

Fig. 2a zeigt eine REM-Aufnahme des PA12-Ausgangsfällpulvers. Fig. 2b zeigt eine REM-Aufnahme des PA12-Fällpulvers nach der Anwendung der Nachbehandlung gemäß Beipiel 1. Der Vergrößerungsfaktor beträgt in beiden Fällen 10000. Ein Vergleich der beiden Figuren zeigt deutlich die Abnahme der Zerklüftung der Oberfläche der Partikel infolge der Nachbehandlung. Diese Beobachtung spiegelt sich ebenfalls in dem Meßwert für die BET-Oberfläche wieder. Dieser lag für das gemäß Beispiel 1 nachbehandelte Pulver bei 3,6 m²/g.

Die Tabelle 1 zeigt die BET-Oberflächen und Korngrößenverteilungen, die für die gemäß den Beispielen 1 bis 4 nachbehandelten Pulver ermittelt wurden. Dabei wurden die Korngrößenverteilungen der Pulver jeweils durch Lichtstreuung im Laserstrahl und die BET-Oberflächen durch Adsorption von Stickstoff ermittelt. D_{0,1} gibt den Durchmesser in µm an, bei dem bei der integralen Kornverteilung nach Laserbeugung 10% des Pulvervolumens unter diesem Durchmesser liegen, D_{0,5} gibt den Durchmesser in µm an, bei dem bei der integralen Kornverteilung nach Laserbeugung 50% des Pulvervolumens unter diesem Durchmesser liegen und D_{0,9} gibt den Durchmesser in µm an, bei dem bei der integralen Kornverteilung nach Laserbeugung 90% des Pulvervolumens unter diesem Durchmesser liegen.

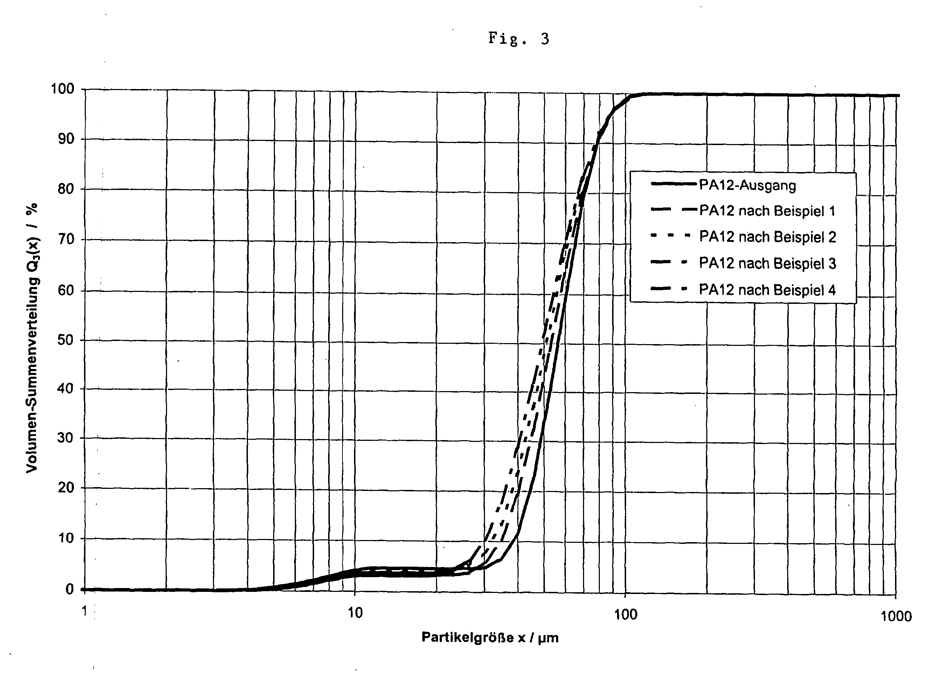

Die integrale Kornverteilung ist dabei für die nach Beispiel 1 bis 4 behandelten Pulver in Figur 3 dargestellt. Bei dem Diagramm von Figur 3 ist dabei auf der Abszisse die Partikelgröße x in µm aufgetragen, während auf der Ordinate die Volumensumme über alle Partikel, deren Partikelgröße kleiner als x ist, als prozentualer Wert aufgetragen ist.

Man erkennt, daß durch die Wahl der Nachbehandlungsbedingungen die BET-Oberfläche bis zu einem Faktor 7,5 reduziert wurde, ohne dass die Korngrößenverteilung durch die Nachbehandlung wesentlich verändert wurde.

Die Verringerung der BET-Oberfläche führte zu einem deutlich niedrigeren Auffrischfaktor der behandelten Pulver verglichen zu dem unbehandelten Pulver. Bei einem Einsatz des nach Beispiel 1 behandelten Pulvers (1,67-fache Verringerung der BET-Oberfläche) und des nach Beispiel 3 behandelten Pulvers (3,16-fache Verringerung der BET-Oberfläche) ergab sich bei der Wiederverwendung des Pulvers ein Wert von 30% bzw. 20% für den Auffrischfaktor gegenüber einem Wert von 50 % bei der Verwendung eines unbehandelten Pulvers.

Die Effekte der Kornverrundung und Oberflächenglättung sind nicht auf das beschriebene PA12-Fällpulver beschränkt, sondern treten auch bei nach anderen Verfahren hergestellten PA12-Pulvern als auch bei anderen Kunststoffpulvern auf. Insbesondere wenn das Ausgangsmaterial als Mahlpulver vorliegt, ist die Oberflächenglättung mit einer Kornverrundung verbunden.

Die oben erzielten niedrigen Werte für die BET-Oberfläche in Kombination mit den erhaltenen Kornverteilungen lassen sich nicht nur für die oben explizit angegebenen Behandlungsdauern und Temperaturen erzielen.

Besonders vorteilhafte Ergebnisse lassen sich erzielen, wenn die Behandlungsdauer 1 Minute übersteigt. Desweiteren lassen sich die gewünschten Pulvereigenschaften sowohl bei Durchführung der Behandlung bei Raumtemperatur (> 15°C) als auch bei einer erhöhten Temperatur erzielen, solange diese Temperatur unterhalb des Schmelzpunktes des Pulvers liegt.

Bei dem Verfahren nach Beispiel 3 lassen sich besonders vorteilhafte Ergebnisse auch dann erzielen, wenn die Temperatur um ± 20 Grad von 140°C abweicht und die Behandlungsdauer oberhalb von 5 Minuten liegt.

Die oben beschriebenen Pulverbehandlungsverfahren können ebenfalls mit dem Ziel einer besseren Durchmischung mehrkomponentiger Pulver angewandt werden. Durch die obige Behandlung können Agglomerate eines Pulverbestandteils besser dispergiert werden. Weiterhin eignen sich die Verfahren zur Herstellung von beschichteten Pulvern, wobei Partikel eines Beschichtungsmaterials (Additiv oder Polymerpulver) lediglich auf die Oberfläche des Grundmaterials aufgeschmolzen werden.

Dies eröffnet die Einführung neuer Materialien auf dem Gebiet des Lasersinterns, der Bereich der verwendbaren Pulvermaterialien kann dabei stark ausgeweitet werden. Die erleichterte Herstellung von zusammengesetzten Pulvern führt dazu, daß über entsprechend zusammengesetzte Pulver sich auf einfache Weise die Eigenschaften der hergestellten dreidimensionalen Objekte beeinflussen lassen. So können beispielsweise die Steifigkeit, die Farbe, bzw. die elektrischen Eigenschaften der Objekte oder der Flammschutz beeinflußt werden.

Obwohl die in dieser Anmeldung beschriebenen Pulverbehandlungsverfahren im Zusammenhang mit dem Lasersintern beschrieben wurden, sind die durch diese Verfahren erzielten vorteilhaften Pulvereigenschaften auch bei anderen industriellen Prozessen, beispielsweise bei Pulverbeschichtungsvorgängen oder der Herstellung von Kosmetika, Sinterpulvern, Additiven für Coil-Coating-Lacken von Nutzen.

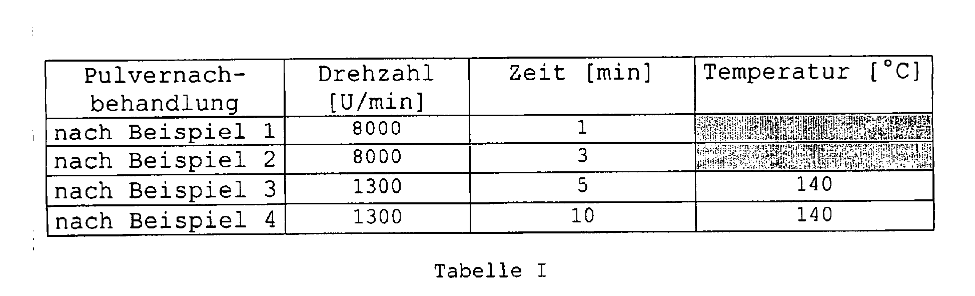

**Tabelle II**

| | BET-Oberfläche [m²/g] | Korngrößenverteilung D 0,1/ D 0,5/ D 0,9 [µm] |
|---|---|---|
| Ausgangsmaterial | 6,0 | 38/57/77 |
| gemäß Beispiel 1 behandeltes Pulver | 3, 6 | 35/54/76 |
| gemäß Beispiel 2 behandeltes Pulver | 0,8 | 32/52/75 |
| gemäß Beispiel 3 behandeltes Pulver | 1,9 | 30/49/75 |
| gemäß Beispiel 4 behandeltes Pulver | 1,7 | 30/49/75 |

## Patentansprüche

1. Einkomponentiges Polyamidpulver zur Herstellung eines dreidimensionalen Objekts mittels Lasersinterns, **dadurch gekennzeichnet, daß** die BET-Oberfläche kleiner als 4 m²/g ist und gleichzeitig die Kornobergrenze kleiner 100µm, der D_{0,9}-Wert kleiner 90µm, der D_{0,1}-Wert kleiner 32µm und der D_{0,5}-Wert kleiner 60µm sind und die Partikel eine im wesentlichen sphärische Form aufweisen und der Auffrischfaktor beim Lasersintern kleiner als 50 Prozent ist.

2. Pulver nach Anspruch 1, **dadurch gekennzeichnet, daß** der Auffrischfaktor beim Lasersintern kleiner als 30 Prozent ist.

3. Polymerpulver nach Anspruch 1 oder 2 zur Herstellung eines dreidimensionalen Objekts mittels Lasersinterns, **dadurch gekennzeichnet, daß** die BET-Oberfläche kleiner als 4 m²/g ist und gleichzeitig die Kornobergrenze kleiner 100µm, der D_{0.9}-Wert kleiner 80µm und der D_{0,5}-Wert kleiner 55µm sind und die Partikel eine im wesentlichen sphärische Form aufweisen.

4. Pulver nach einem der Ansprüche 1 bis 3, **dadurch gekennzeichnet, daß** das Pulver eine BET-Oberfläche aufweist, deren Wert kleiner oder gleich 3 m²/g ist.

5. Pulver nach einem der Ansprüche 1 bis 4, **dadurch gekennzeichnet, daß** das Pulver eine BET-Oberfläche aufweist, deren Wert kleiner oder gleich 2 m²/g ist.

6. Pulver nach einem der Ansprüche 1 bis 5, **dadurch gekennzeichnet, daß** das Pulver aus Polyamid 11 oder Polyamid 12 besteht.

7. Pulver nach einem der Ansprüche 1 bis 6, **dadurch gekennzeichnet, daß** das Pulver ein PA12-Fällpulver ist.

8. Verfahren zur Herstellung eines Pulvers für das Lasersintern, bei dem als Ausgangsmaterial ein mittels Fällung oder Mahlen gewonnenes Kunststoffpulver verwendet wird, das in einem geeigneten Aggregat mechanisch oder mechanisch-thermisch für mindestens 1 Minute derart behandelt wird, dass die BET-Oberfläche kleiner als 4 m²/g ist und gleichzeitig die Kornobergrenze kleiner 100µm, der D_{0,9}-Wert kleiner 90µm, der D_{0,1}-Wert kleiner 32µm und der D_{0,5}-Wert kleiner 60µm sind und die Partikel eine im wesentlichen sphärische Form aufweisen..

9. Verfahren nach Anspruch 8, bei dem das Ausgangsmaterial mindestens eine weitere Komponente aufweist.

10. Verfahren nach Anspruch 9, bei dem eine weitere Komponente ein Polymerpulver oder ein Additiv ist.

11. Verfahren zum Herstellen eines dreidimensionalen Objekts mittels Lasersinterns, bei dem aufeinanderfolgende Schichten des zu bildenden Objekts aus verfestigbarem Pulvermaterial nacheinander an den dem Objekt entsprechenden Stellen verfestigt werden und ein durch einen Mahl- oder Fällprozess hergestelltes Polymerpulver, bei dem die BET-Oberfläche kleiner als 4 m²/g ist und gleichzeitig die Kornobergrenze kleiner 100µm, der D_{0,9}-Wert kleiner 90µm, der D_{0,1}-Wert kleiner 32µm und der D_{0,5}-Wert kleiner 60µm sind und die Partikel eine im wesentlichen sphärische Form aufweisen, verwendet wird.

12. Verfahren nach Anspruch 11, bei dem das Pulverausgangsmaterial mindestens eine weitere Komponente aufweist.

13. Verfahren nach Anspruch 12, bei dem eine weitere Komponente ein Polymerpulver oder ein Additiv ist.

14. Verwendung eines Pulvers nach einem der Ansprüche 1 bis 7 oder eines nach einem der Verfahren der Ansprüche 8 bis 10 hergestellten Pulvers zum Herstellen eines dreidimensionalen Objektes mittels Lasersinterns.

## Claims

1. Single-component polyamide powder for producing a three-dimensional object by means of laser sintering, **characterised in that** the BET surface is smaller than 4 m²/g and at the same time the upper grain limit is below 100µm, the D_{0.9}-value is below 90 µm, the D_{0.1}-value is below 32 µm and the D_{0.5}-value is below 60 µm and the particles have a substantially spherical shape and the refreshing factor in laser sintering is below 50 percent.

2. Powder according to claim 1, **characterised in that** the refreshing factor in laser sintering is less than 30 percent.

3. Polymer powder according to claim 1 or 2 for producing a three-dimensional object by means of laser sintering, **characterised in that** the BET surface is smaller than 4 m²/g and at the same time the upper grain limit is below 100µm, the D_{0.9}-value is below 80 µm, and the D_{0.5}-value is below 55 µm and the particles have a substantially spherical shape.

4. Powder according to one of claims 1 to 3, **characterised in that** the powder has a BET surface having a value smaller than or equal to 3 m²/g.

5. Powder according to one of claims 1 to 4, **characterised in that** the powder has a BET surface having a value smaller than or equal to 2 m²/g.

6. Powder according to one of claims 1 to 5, **characterised in that** the powder consists of polyamide 11 or polyamide 12.

7. Powder according to one of claims 1 to 6, **characterised in that** the powder is a precipitated PA12-powder.

8. Method for producing a powder for laser sintering, wherein as a base material a plastic powder attained by means of precipitation or milling is used, which is mechanically or mechanically-thermally treated for at least one minute in an appropriate unit such that the BET surface is smaller than 4 m²/g and at the same time the upper grain limit is below 100µm, the D_{0.9}-value is below 90 µm, the D_{0.1}-value is below 32 µm and the D_{0.5}-value is below 60 µm and the particles have a substantially spherical shape.

9. Method according to claim 8 wherein the base material comprises at least one further component.

10. Method according to claim 9 wherein a further component is a polymer powder or an additive.

11. Method for manufacturing a three-dimensional object by means of laser sintering wherein subsequent layers of the object to be formed are subsequently solidified from solidifiable powder material at positions corresponding to the object and a polymer powder is used, which was manufactured by a milling process or a precipitation process and wherein the BET surface is smaller than 4 m²/g and at the same time the upper grain limit is below 100µm, the D_{0.9}-value is below 90 µm, the D_{0.1}-value is below 32 µm and the D_{0.5}-value is below 60 µm and the particles have a substantially spherical shape.

12. Method according to claim 11 wherein the powder base material has at least one further component.

13. Method according to claim 12 wherein a further component is a polymer powder or an additive.

14. Use of a powder according to one of claims 1 to 7 or use of a powder manufactured by a method according to one of claims 8 to 10 for the manufacturing of a three-dimensional object by laser sintering.

## Revendications

1. Poudre polyamide à un seul composant pour la fabrication d'un objet en trois dimensions par frittage laser, **caractérisée en ce que** la surface BET est inférieure à 4 m²/g, la limite supérieure de grain étant simultanément inférieure à 100 µm, la valeur D_{0,9} inférieure à 90 µm, la valeur D_{0,1} inférieure à 32 µm et la valeur D_{0,5} inférieure à 60 µm, et **en ce que** les particules présentent une forme sensiblement sphérique et le facteur de rafraîchissement est inférieur à 50 % lors du frittage laser.

2. Poudre selon la revendication 1, **caractérisée en ce que** le facteur de rafraîchissement est inférieur à 30 % lors du frittage laser.

3. Poudre polymère selon la revendication 1 ou la revendication 2 pour la fabrication d'un objet en trois dimensions par frittage laser, **caractérisée en ce que** la surface BET est inférieure à 4 m²/g, la limite supérieure de grain étant simultanément inférieure à 100 µm, la valeur D_{0,9} inférieure à 80 µm et la valeur D_{0,5} inférieure à 55 µm, et **en ce que** les particules présentent une forme sensiblement sphérique.

4. Poudre selon l'une des revendications 1 à 3, **caractérisée en ce que** la poudre présente une surface BET dont la valeur est inférieure ou égale à 3 m²/g.

5. Poudre selon l'une des revendications 1 à 4, **caractérisée en ce que** la poudre présente une surface BET dont la valeur est inférieure ou égale à 2 m²/g.

6. Poudre selon l'une des revendications 1 à 5, **caractérisée en ce que** la poudre est une poudre de polyamide 11 ou de polyamide 12.

7. Poudre selon l'une des revendications 1 à 6, **caractérisée en ce que** la poudre est une poudre PA12 précipitée.

8. Procédé de fabrication d'une poudre pour le frittage laser, où la matière initiale utilisée est une poudre de matière plastique obtenue par précipitation ou broyage, traitée mécaniquement ou mécaniquement/thermiquement pendant au moins 1 minute dans un agrégat adapté de manière que la surface BET soit inférieure à 4 m²/g, la limite supérieure de grain étant simultanément inférieure à 100 µm, la valeur D_{0,9} inférieure à 90 µm, la valeur D_{0,1} inférieure à 32µm et la valeur D_{0,5} inférieure à 60 µm, et que les particules présentent une forme sensiblement sphérique.

9. Procédé selon la revendication 8, où la matière initiale comprend au moins un autre composant.

10. Procédé selon la revendication 9, où un autre composant est une poudre polymère ou un additif.

11. Procédé de fabrication d'un objet en trois dimensions par frittage laser, où des couches successives de l'objet à former en matière poudreuse durcissable sont consécutivement solidifiées sur les emplacements correspondant à l'objet et où il est recouru à une poudre polymère obtenue par processus de broyage ou de précipitation, pour laquelle la surface BET est inférieure à 4 m²/g, la limite supérieure de grain étant simultanément inférieure à 100µm, la valeur D_{0,9} inférieure à 90µm, la valeur D_{0,1} inférieure à 32 µm et la valeur D_{0,5} inférieure à 60 µm, et où les particules présentent une forme sensiblement sphérique.

12. Procédé selon la revendication 11, où la matière poudreuse initiale comprend au moins un autre composant.

13. Procédé selon la revendication 12, où un autre composant est une poudre polymère ou un additif.

14. Utilisation d'une poudre selon l'une des revendications 1 à 7 ou d'une poudre fabriquée selon l'un des procédés des revendications 8 à 10 pour la fabrication d'un objet en trois dimensions par frittage laser.
